Europäisches Patentamt

(19) European Patent Office

Office européen des brevets

(11) **EP 1 230 308 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(21) Anmeldenummer: **00969547.9**

(22) Anmeldetag: **25.10.2000**

(51) Int Cl.$^7$: **C09C 1/00**, C09C 3/06

(86) Internationale Anmeldenummer:
**PCT/EP2000/010507**

(87) Internationale Veröffentlichungsnummer:
**WO 2001/030920 (03.05.2001 Gazette 2001/18)**

(54) **FARBSTARKE INTERFERENZPIGMENTE**

INTENSELY COLOURED INTERFERENCE PIGMENTS

PIGMENTS DE POLARISATION A TEINTES DE FORTE INTENSITE

(84) Benannte Vertragsstaaten:
**AT BE CH CY DE DK ES FI FR GB GR IE IT LI LU MC NL PT SE**

(30) Priorität: **28.10.1999 DE 19951869**

(43) Veröffentlichungstag der Anmeldung:
**14.08.2002 Patentblatt 2002/33**

(73) Patentinhaber: **MERCK PATENT GmbH 64293 Darmstadt (DE)**

(72) Erfinder:
• **BERNHARDT, Klaus
64823 Gross-Umstadt (DE)**
• **SCHMIDT, Christoph
65830 Kriftel (DE)**
• **SCHOEN, Sabine
64287 Darmstadt (DE)**

(56) Entgegenhaltungen:
**EP-A- 0 211 351          EP-A- 0 708 154
EP-A- 0 753 545          WO-A-00/43456
WO-A-94/13489**

**Beschreibung**

Die vorliegende Erfindung betrifft farbstarke Interferenzpigmente auf der Basis von mehrfach beschichteten plättchenförmigen Substraten.

Glanz- oder Effektpigmente werden in vielen Bereichen der Technik eingesetzt, insbesondere im Bereich der Autolacke, der dekorativen Beschichtung, im Kunststoff, in Farben, Druckfarben sowie in kosmetischen Formulierungen.

Glanzpigmente, die einen winkelabhängigen Farbwechsel zwischen mehreren Interferenzfarben zeigen, sind aufgrund ihres Farbenspiels von besonderem Interesse für Autolacke sowie bei fälschungssicheren Wertschriften. Derartige Pigmente auf Basis von mehrfach beschichteten plättchenförmigen Substraten sind aus der U.S. 4,434,010, JP H7-759, U.S. 3,438,796, U.S. 5,135,812, DE 44 05 494, DE 44 37 753, DE 195 16 181 und DE 195 15 988 bekannt.

Glanzpigmente auf Basis transparenter plättchenförmiger Substrate, die keinen "harten" metallischen Glanz aufweisen, sind Gegenstand der WO 93/12182. Glimmerplättchen werden mit einer hochbrechenden Metalloxidschicht, wie z.B. $TiO_2$, und einer nicht selektiv absorbierenden Schicht belegt. Diese Pigmente zeigen in Abhängigkeit von der $TiO_2$-Schichtdicke in der Aufsicht eine bestimmte Interferenzfarbe, die mit schräger werdendem Blickwinkel zunehmend schwächer wird und schließlich nach grau bzw. schwarz abkippt. Die Interferenzfarbe ändert sich nicht, aber es ist eine Abnahme der Farbsättigung festzustellen.

In der JP 1992/93206 werden Glanzpigmente auf Basis von Glasflakes bzw. Glimmerpartikeln beansprucht, die mit einer opaken Metallschicht und alternierenden $SiO_2$- und $TiO_2$-Schichten belegt sind.

Aus der EP 0 753 545 A2 sind goniochromatische Glanzpigmente auf Basis von mehrfach beschichteten, hochbrechenden, für sichtbares Licht zumindest teilweise durchlässigen, nichtmetallischen, plättchenförmigen Substraten bekannt, die mindestens ein Schichtpaket aus einer farblosen niedrigbrechenden und einer reflektierenden, selektiv oder nicht selektiv absorbierenden Beschichtung aufweisen. Bei dem in EP 0 753 545 A 2 beschriebenen Herstellungsverfahren handelt es sich um eine Beschichtung des Pigmentsubstrates über CVD (Chemical Vapour Deposition) in einem Wirbelbettreaktor ("Fluidized Bed"-Verfahren). Dabei wird das Substrat, z.B. feinteiliger Glimmer, in einem Strom eines inerten Trägergases aufgewirbelt und in Bewegung gehalten. Die zur Bildung der Oxidschichten erforderlichen Reagentien werden über den Inertgasstrom bzw. weitere Inertgaseinlässe zugeführt. Aufgrund des hohen Dichteunterschiedes zwischen dem Glimmer/Pigment und dem Trägergas ist jedoch ein wesentliches Problem dieses Verfahrens eine gleichmäßige Verteilung der Feststoffteilchen und damit eine gleichmäßige Beschichtung. Nachteile dieser Erfindung sind demzufolge der technisch sehr aufwendige und kostenintensive Herstellungsprozeß sowie die oft schwere Reproduzierbarkeit der Pigmente in der gewünschten Produktqualität.

Goniochromatische Glanzpigmente mit einer siliziumhaltigen Beschichtung auf Basis von mehrfach beschichteten plättchenförmigen metallischen Substraten sind aus der EP 0 768 343 A2 bekannt.

Den aus dem Stand der Technik bekannten Mehrschichtpigmenten ist gemeinsam, daß sie eine zu geringe Farbstärke, und ein vergleichsweises niedriges Deckvermögen besitzen. Weiterhin sind die Pigmente zum Teil sehr schwer herstellbar bzw. reproduzierbar.

Aufgabe der vorliegenden Erfindung ist es, deckende Gold- und Orangerote-Interferenzpigmente mit einer hohen Farbstärke zur Verfügung zu stellen, die sich durch ihre vorteilhaften Anwendungseigenschaften auszeichnen und gleichzeitig auf einfache Art und Weise hergestellt werden können.

Überraschenderweise wurden nun Gold- und Orangerotpigmente auf Basis von mehrfach beschichteten plättchenförmigen Substraten gefunden, die eine bestimmte Anordnung optisch funktioneller Schichten enthalten, wodurch besondere optische Effekte erzielt werden.

Die erfindungsgemäßen farbstarken Interferenzpigmente zeichnen sich durch ihre außerordentlich hohe Buntheit C ("Farbstärke"), ihr sehr hohes Deckvermögen und einen sehr starken Glanz mit Glitzereffekt aus. Im Gegensatz zu goldfarbenen Perlglanzpigmenten, wie sie beispielsweise aus der EP 0 211 351 B1 bekannt sind, zeigen die erfindungsgemäßen goldfarbenen Interferenzpigmente eine deutlich höhere Farbstärke und ein höheres Deckvermögen. Die erfindungsgemäßen Goldpigmente sind insbesondere im Tiefdruck auf Textilien eine gleichwertige - und im Bezug auf Glanz und Farbstärke - überlegene Alternative zu den bekannten Metallbronzen.

Im Gegensatz zu den goniochromatischen Pigmenten weisen die erfindungsgemäßen Pigmente keinen bzw. nur einen geringfügig winkelabhängigen Farbeffekt auf.

Gegenstand der Erfindung sind somit farbstarke Interferenzpigmente auf der Basis von mehrfach beschichteten plättchenförmigen Substraten, die mindestens zwei Schichtenfolgen aus

(A) einer farblosen Beschichtung mit einem Brechungsindex $n \leq 1{,}8$,

(B) einer hochbrechenden Beschichtung aus Pseudobrookit bestehend aus einem Gemisch aus $TiO_2$ und $Fe_2O_3$ im Verhältnis 1:0,1 bis 1:5 und optional ein oder mehreren Metalloxiden in Mengen von $\leq 20$ Gew.% bezogen auf die Schicht (B),

und optional

(C) einer äußeren Schutzschicht

aufweisen.

Gegenstand der Erfindung ist weiterhin die Verwendung der erfindungsgemäßen Pigmente in Farben, Lacken, Kunststoffen, Druckfarben, Sicherheitsdruckfarben, keramischen Materialien, Gläsern und kosmetischen Formulierungen und insbesondere in Druckfarben.

Weiterhin sind die erfindungsgemäßen Pigmente auch zur Herstellung von Pigmentpräparationen sowie zur Herstellung von Trockenpräparaten, wie z.B. Granulate, Chips, Pellets, Briketts, etc. geeignet. Die Trockenpräparate sind insbesondere für Druckfarben geeignet.

Geeignete Basissubstrate für die erfindungsgemäßen Mehrschichtpigmente sind einerseits opake und andererseits transparente plättchenförmige Substrate. Bevorzugte Substrate sind Schichtsilikate sowie mit Metalloxiden beschichtete plättchenförmige Materialien. Insbesondere geeignet sind natürliche und synthetische Glimmer, Talkum, Kaolin, plättchenförmige Eisen-, oder Aluminiumoxide, Glas-, $SiO_2$-, $TiO_2$- oder synthetische Keramikflakes, synthetische trägerfreie Plättchen, Liquid crystal polymers (LCPs), holographische Pigmente, BiOCl, Metallplättchen, wie z. B. Aluminiumplättchen, Plättchen aus Aluminiumbronzen, Messingbronzen, Zinkbronzen, Titanbronzen, oder aus anderen vergleichbaren Materialien.

Die Größe der Basissubstrate ist an sich nicht kritisch und kann auf den jeweiligen Anwendungszweck abgestimmt werden. In der Regel haben die plättchenförmigen Substrate eine Dicke zwischen 0,05 und 5 μm, insbesondere zwischen 0,1 und 4,5 μm. Die Ausdehnung in den beiden anderen Bereichen beträgt üblicherweise zwischen 1 und 250 μm, vorzugsweise zwischen 2 und 200 μm und insbesondere zwischen 5 und 60 μm.

Die Dicke der einzelnen Schichten mit hohem (z. B. Pseudobrookit) und niedrigem Brechungsindex auf dem Basissubstrat ist wesentlich für die optischen Eigenschaften des Pigments. Für ein Pigment mit intensiven Interferenzfarben muß die Dicke der einzelnen Schichten genau aufeinander eingestellt werden.

Wenn n der Brechungsindex einer dünnen Schicht und d ihre Dicke ist, wird die Interferenzfarbe dieser Schicht von dem Produkt n · d (n · d = optische Dicke) bestimmt.

Die bei Normallichteinfall im reflektierten Licht entstehenden Farben eines solchen Films ergeben sich aus einer Verstärkung des Lichtes der Wellenlänge

$$\lambda = \frac{4}{2N-1} \cdot n \cdot d$$

und durch Schwächung des Lichtes der Wellenlänge,

$$\lambda = \frac{2}{N} \cdot n \cdot d$$

wobei N eine positive ganze Zahl ist.

Die bei zunehmender Filmdicke resultierende Variation der Farbe ergibt sich aus der Verstärkung bzw. Schwächung bestimmter Wellenlängen des Lichtes durch Interferenz. Wenn mehrere Schichten in einem Mehrschichtpigment die gleiche optische Dicke besitzen, wird die Farbe des reflektierten Lichts mit zunehmender Zahl der Schichten intensiver. Bei geeigneter Wahl der Schichtdicken können aber auch mit Schichten unterschiedlicher optischer Dicke sehr attraktive Interferenzpigmente erhalten werden. Die Dicke der einzelnen Metalloxidschichten unabhängig von ihrem Brechungsindex beträgt in Abhängigkeit vom Anwendungsgebiet in der Regel 10 bis 1000 nm, vorzugsweise 15 bis 800 nm und insbesondere 20-600 nm.

Als farblose niedrigbrechende für die Beschichtung (A) geeignete Materialien sind vorzugsweise Metalloxide bzw. die entsprechenden Oxidhydrate, wie z.B. $SiO_2$, $Al_2O_3$, $AlO(OH)$, $B_2O_3$, $MgF_2$, $MgSiO_3$ oder ein Gemisch der genannten Metalloxide, geeignet. Die Dicke der Schicht (A) beträgt 10 - 1000 nm, vorzugsweise 20 - 800 nm und insbesondere 30 - 600 nm.

Durch die Beschichtung des Substrates mit einer relativ dünnen niedrigbrechenden Schicht wird die mechanische Stabilität erhöht und eine glatte Substratoberfläche (weniger Unebenheiten, weniger Poren) erhalten.

Die erfindungsgemäßen Interferenzpigmente weisen alternierend eine hochbrechende Beschichtung (B) bestehend aus einem Gemisch aus $TiO_2$ und $Fe_2O_3$, vorzugsweise Pseudobrookit, in Kombination mit einer farblosen niedrigbrechenden Beschichtung (A) auf. Die Pigmente können mehrere, gleiche oder verschiedene Kombinationen an Schichtpaketen enthalten, bevorzugt ist aber die Belegung des Substrats mit zwei Schichtpaketen (A) + (B) und optional (C). Zur Intensivierung der Farbstärke kann das erfindungsgemäße Pigment bis zu 4 Schichtpaketen enthalten, wobei die Dicke aller Schichten auf dem Substrat 3 μm allerdings nicht überschreiten sollte. Vorzugsweise wird eine gerade Anzahl von Schichten auf das plättchenförmige Substrat aufgebracht. Besonders bevorzugt ist ein Aufbau von vier optischen Interferenzschichten in der Reihenfolge (A) (B) (A) (B) und optional (C).

Die hochbrechende Schicht (B) hat vorzugsweise einen Brechungsindex n $\geq$ 1,8, insbesondere n $\geq$ 2,0 und ist ein Gemisch aus $TiO_2$ und $Fe_2O_3$, wobei das Mischungsverhältnis 1:0,1 bis 1:5, insbesondere 1:1 bis 1:2,5 beträgt. Es handelt sich bei der Schicht (B) um den farbstarken Pseudobrookit. Die Dicke der Schicht (B) beträgt 10 - 550 nm, vorzugsweise 15 - 400 nm und insbesondere 20 - 350 nm.

Häufig empfiehlt es sich zur Erhöhung der Farbstärke der Schicht (B) dem $TiO_2/Fe_2O_3$-Gemisch noch ein oder mehrere Metalloxide, wie z.B. $Al_2O_3$, $Ce_2O_3$, $B_2O_3$, $ZrO_2$, $SnO_2$, zuzumischen. Der Gew.%-Anteil der weiteren Metalloxide neben dem $Fe_2O_3/TiO_2$-Gemisch sollte in der Schicht (B) nicht mehr als 20 Gew.%, vorzugsweise nicht mehr als 10 Gew.%, betragen.

Durch die mehrfache Beschichtung der Substrate mit einer niedrigbrechenden Schicht (A) und einer hochbrechenden Schicht (B) entstehen Interferenzpigmente, deren Farbe, Glanz und Deckvermögen in weiten Grenzen variiert werden können.

Die erfindungsgemäßen Pigmente lassen sich leicht herstellen durch die Erzeugung mehrerer hoch- und niedrigbrechender Interferenzschichten mit genau definierter Dicke und glatter Oberfläche auf den feinteiligen, plättchenförmigen Substraten.

Die Metalloxidschichten werden vorzugsweise naßchemisch aufgebracht, wobei die zur Herstellung von Perlglanzpigmenten entwickelten naßchemischen Beschichtungsverfahren angewendet werden können; derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren Patentdokumenten und sonstigen Publikationen.

Bei der Naßbeschichtung werden die Substratpartikel in Wasser suspendiert und mit einem oder mehreren hydrolysierbaren Metallsalzen bei einem für die Hydrolyse geeigneten pH-Wert versetzt, der so gewählt wird, daß die Metalloxide bzw. Metalloxidhydrate direkt auf den Plättchen ausgefällt werden, ohne daß es zu Nebenfällungen kommt. Der pH-Wert wird üblicherweise durch gleichzeitiges Zudosieren einer Base und/oder Säure konstant gehalten. Anschließend werden die Pigmente abgetrennt, gewaschen und getrocknet und gegebenenfalls geglüht, wobei die Glühtemperatur im Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können. Der Farbton der Pigmente kann in weiten Grenzen durch unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder meßtechnisch kontrolliertes Anfahren der gewünschten Farbe erreicht werden.

Zur Erhöhung der Licht-, Wasser- und Wetterstabilität empfiehlt es sich häufig, in Abhängigkeit vom Einsatzgebiet das fertige Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung (Schicht C) wird die chemische Stabilität weiter erhöht oder die Handhabung des Pigments, insbesondere die Einarbeitung in unterschiedliche Medien, erleichtert.

Die erfindungsgemäßen Pigmente sind mit einer Vielzahl von Farbsystemen kompatibel vorzugsweise aus dem Bereich der Lacke, Farben und Druckfarben. Für die Herstellung der Druckfarben ist eine Vielzahl von Bindern, insbesondere wasserlösliche Typen, geeignet, wie sie z.B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen, für Anwendungen im Agrarbereich, z.B. für Gewächshausfolien, sowie z.B. für die Farbgebung von Zeltplanen geeignet.

Gegenstand der Erfindung ist somit auch die Verwendung der Pigmente in Formulierungen wie Farben, Druckfarben, Lacken, Kunststoffen, keramischen Materialien, Gläsern und in kosmetischen Formulierungen sowie als Dotierstoff bei der Lasermarkierung von Papier und Kunststoffen.

Es versteht sich von selbst, daß für die verschiedenen Anwendungszwecke die Mehrschichtpigmente auch vorteilhaft in Abmischung mit organischen Farbstoffen, organischen Pigmenten oder anderen Pigmenten, wie z. B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers), und herkömmlichen transparenten, bunten und schwarzen Glanzpigmenten auf der Basis von metalloxidbeschichteten Glimmer- und $SiO_2$-Plättchen, etc., verwendet werden können. Die Mehrschichtpigmente können in jedem Verhältnis mit handelsüblichen Pigmenten und Füllern gemischt werden.

Die erfindungsgemäßen Pigmente sind weiterhin geeignet zur Herstellung von fließfähigen Pigmentpräparationen und Trockenpräparaten, insbesondere für Druckfarben, bestehend aus dem erfindungsgemäßen Pigment, Bindemittel und optional ein oder mehreren Additiven.

Die nachfolgenden Beispiele sollen die Erfindung näher erläutern ohne sie jedoch zu beschränken.

Beispiele

Beispiel 1

100 g Glimmer der Teilchengröße 10-60 μm werden in 2 l entmineralisiertem Wasser auf 75 °C aufgeheizt. Nach Erreichen dieser Temperatur wird der pH-Wert der Suspension mit 32 %-iger Natronlauge auf pH 7,5 erhöht und unter starkem Rühren 163 g Natronwasserglaslösung (13,5 % $SiO_2$) zudosiert. Dabei wird der pH-Wert mit 10 %-iger Salzsäure konstant gehalten. Anschließend wird der pH-Wert mit 10 %-iger Salzsäure auf pH 2,6 abgesenkt, 15 Minuten nachgerührt, und eine Lösung von 121,5 g $FeCl_3$ x 6 $H_2O$, 43,3 g $TiCl_4$ und 10,6 g $AlCl_3$ x 6 $H_2O$ in 77,0 g entmineralisiertem Wasser zudosiert. Der pH-Wert wird mit 32 %-iger Natronlauge konstant bei 2,6 gehalten. Nach Zugabe dieser Lösung wird ca. 15 Minuten nachgerührt. Anschließend wird der pH-Wert mit 32 %-iger Natronlauge auf 7,5 angehoben und bei diesem pH-Wert 394 g Natronwasserglaslösung (13,5 % $SiO_2$) zudosiert. Danach wird der pH-Wert mit 10 %iger Salzsäure auf 2,6 abgesenkt, 15 Minuten nachgerührt und eine Lösung von 135,0 g $FeCl_3$ x 6 $H_2O$, 51,7 g $TiCl_4$ und 11,0 g $AlCl_3$ x 6 $H_2O$ in 87,2 g entmineralisiertem Wasser zudosiert. Der pH-Wert wird mit 32 %iger Natronlauge konstant bei pH 2,6 gehalten. Nach Zugabe dieser Lösung wird ca. 15 Minuten nachgerührt. Anschließend wird der pH-Wert mit 32 %-iger Natronlauge auf pH 5,0 angehoben und weitere 15 Minuten nachgerührt. Das Pigment wird filtriert, mit entmineralisiertem Wasser gewaschen und 16 h bei 110 °C getrocknet. Zuletzt wird das Pigment 30 Minuten bei 850 °C geglüht. Man erhält ein leicht grünstichiges Goldpigment mit intensiver Farbe, hohem Deckvermögen und starkem Glanz.

Beispiel 2

100 g Glimmer der Teilchengröße 10-60 μm werden in 2 l entmineralisiertem Wasser auf 75 °C aufgeheizt. Nach Erreichen dieser Temperatur wird der pH-Wert der Suspension mit 32 %-iger Natronlauge auf pH 7,5 erhöht und unter starkem Rühren 163 g Natronwasserglaslösung (13,5 % $SiO_2$) zudosiert. Dabei wird der pH-Wert mit 10 %-iger Salzsäure konstant gehalten. Anschließend wird der pH-Wert mit 10 %-iger Salzsäure auf pH 2,6 abgesenkt, 15 Minuten nachgerührt, und eine Lösung von 188,0 g $FeCl_3$ x 6 $H_2O$, 77,0 g $TiCl_4$ und 16,7 g $AlCl_3$ x 6 $H_2O$ in 121,4 g entmineralisiertem Wasser zudosiert. Der pH-Wert wird mit 32 %-iger Natronlauge konstant bei 2,6 gehalten. Nach Zugabe dieser Lösung wird ca. 15 Minuten nachgerührt. Anschließend wird der pH-Wert mit 32 %-iger Natronlauge auf 7,5 angehoben und bei diesem pH-Wert 484,6 g Natronwasserglaslösung (13,5 % $SiO_2$) mit einer Rate von 2ml/min zudosiert. Danach wird der pH-Wert mit 10 %-iger Salzsäure auf 2,6 abgesenkt, 15 Minuten nachgerührt und eine Lösung von 188,0 g $FeCt_3$ x 6 $H_2O$, 77,0 g $TiCl_4$ und 16,7 g $AlCl_3$ x 6 $H_2O$ in 121,4 g entmineralisiertem Wasser zudosiert. Der pH-Wert wird mit 32 %-iger Natronlauge konstant bei pH 2,6 gehalten. Nach Zugabe dieser Lösung wird ca. 15 Minuten nachgerührt. Anschliessend wird der pH-Wert mit 32 %-iger Natronlauge auf pH 5,0 angehoben und weitere 15 Minuten nachgerührt. Das Pigment wird filtriert, mit 15 l entmineralisiertem Wasser gewaschen und 16 h bei 110 °C getrocknet. Das Pigment wird abschließend 30 Minuten bei 850 °C geglüht. Man erhält ein orangerotfarbenes Glanzpigment mit intensiver Farbe, hohem Deckvermögen und starkem Glanz.

Die nachfolgende Tabelle zeigt die koloristische Daten der erfindungsgemäßen Pigmente im Vergleich zu einem Perlglanzgoldpigment und einem Goldbronzepigment, die dem Stand der Technik entsprechen. (Hunter-Lab-Werte, gemessen auf schwarzem Untergrund im Glanz 22,5°/22,5°):

| Pigment | L | a | b | h | C | Deckvermögen |
|---|---|---|---|---|---|---|
| goldfarbenes Perlglanzpigment Iriodin® 306 ($TiO_2$/$Fe_2O_3$ beschichtetes Glimmerpigment der Teilchengröße 10-60 μm der Fa. Merck KGaA) | 72,9 | 0,6 | 29,7 | 88,8 | 29,7 | 40,8 |
| Goldpigment Beisp. 1 | 84,0 | -4,7 | 39,3 | 96,8 | 39,6 | 56,5 |
| Metallgoldbronze-Pigment (Fa. Eckart, Reichbleichgold), | 78,2 | 0,9 | 22,7 | 87,7 | 22,7 | 51,8 |

Die koloristischen Daten zeigen insbesondere im b-Wert und der Buntheit C eindeutig die Vorteile gegenüber den Vergleichspigmenten.

Beispiel 3: Nachbeschichtung

200 g Goldpigment aus Beispiel 1 werden in 1,8 l entmineralisiertem Wasser auf 75 °C aufgeheizt. Nach Erreichen dieser Temperatur wird der pH-Wert mit 5 %-iger Salzsäure auf pH 2,5 eingestellt und eine Lösung von 11,5 g ZrOCl$_2$ x 8 H$_2$O, 11,4 g NaH$_2$PO$_4$ x H$_2$O und 10 ml 37 %-iger Salzsäure in 856 g entmineralisiertem Wasser innerhalb 60 Minuten zudosiert. Der pH-Wert wird dabei mit 5 %-iger Natronlauge konstant gehalten. Nach einer Nachrührzeit von 30 Minuten wird der pH-Wert mit 5 %-iger Natronlauge auf 9,2 erhöht. Nach weiteren 30 Minuten Rühren wird eine Lösung von 4,1 g Z6040 (Organosiloxan; Dow Corning) in 200 ml entmineralisiertem Wasser über einen Zeitraum von 30 Minuten zudosiert und weitere 30 Minuten nachgerührt. Das Produkt wird abfiltriert, gewaschen und bei 140 °C 16 h lang getrocknet.

**Patentansprüche**

1. Farbstarke Interferenzpigmente auf der Basis von mehrfach beschichteten plättchenförmigen Substraten, die mindestens zwei Schichtenfolgen aus

   (A) einer farblosen Beschichtung mit einem Brechungsindex n ≤ 1,8,

   (B) einer hochbrechenden Beschichtung aus Pseudobrookit bestehend aus einem Gemisch aus TiO$_2$ und Fe$_2$O$_3$ im Verhältnis 1:0,1 bis 1:5 und optional ein oder mehreren Metalloxiden in Mengen von ≤ 20 Gew.% bezogen auf die Schicht (B),
   und optional

   (C) einer äußeren Schutzschicht.

   aufweisen.

2. Interferenzpigmente nach Anspruch 1 oder 2, **dadurch gekennzeichnet, daß** es sich bei den plättchenförmigen Substraten um natürlichen oder synthetischen Glimmer, Glas-, Al$_2$O$_3$-, SiO$_2$- oder TiO$_2$-Plättchen sowie mit Metalloxiden beschichtete, plättchenförmige Materialien handelt.

3. Interferenzpigmente nach Anspruch 1 oder 2, **dadurch gekennzeichnet, daß** die niedrigbrechende Beschichtung auf dem plättchenförmigen Substraten aus SiO$_2$, Al$_2$O$_3$, AlO(OH), B$_2$O$_3$, MgSiO$_3$ oder aus einem Gemisch der genannten Verbindungen besteht.

4. Interferenzpigmente nach einem der Ansprüche 1 bis 3, **dadurch gekennzeichnet, daß** die Schicht (A) im wesentlichen aus ein oder mehreren Metalloxiden besteht.

5. Interferenzpigmente nach einem der Ansprüche 1 bis 4, **dadurch gekennzeichnet, daß** die Schicht (A) im wesentlichen aus Siliziumdioxid, Aluminiumoxid, Magnesiumfluorid oder deren Gemischen besteht.

6. Interferenzpigmente nach einem der Ansprüche 1 bis 5, **dadurch gekennzeichnet, daß** die Schicht (B) als weiteres Metalloxid Al$_2$O$_3$, Ce$_2$O$_3$ und/oder B$_2$O$_3$ enthält.

7. Interferenzpigmente nach einem der Ansprüche 1 bis 6, **dadurch gekennzeichnet, daß** sie bis zu viermal die Schichtenfolge (A) + (B) aufweisen.

8. Interferenzpigmente nach einem der Ansprüche 1 bis 7, **dadurch gekennzeichnet, daß** sie nur zwei Schichtenfolgen (A) + (B) und optional Schicht (C) enthalten.

9. Verfahren zur Herstellung der Interferenzpigmente nach einem der Ansprüche 1 bis 8, **dadurch gekennzeichnet, daß** die Metalloxide naßchemisch durch hydrolytische Zersetzung von Metallsalzen in wäßrigen Medium auf das plättchenförmige Substrat aufgebracht werden.

10. Verwendung der Interferenzpigmente nach Anspruch 1 in Farben, Lacken, Druckfarben, Sicherheitsdruckfarben, Kunststoffen, keramischen Materialien, Gläsern und in kosmetischen Formulierungen.


**Claims**

1.  Intensely coloured interference pigments based on multicoated flake-form substrates which have at least two layer sequences comprising

    (A) a colourless coating having a refractive index n ≤ 1.8,

    (B) a high-refractive-index coating of pseudobrookite consisting of a mixture of $TiO_2$ and $Fe_2O_3$ in the ratio 1:0.1 to 1:5 and optionally one or more metal oxides in amounts of ≤ 20% by weight, based on layer (B),
    and optionally

    (C) an outer protective layer.

2.  Interference pigments according to Claim 1 or 2, **characterised in that** the flake-form substrates are natural or synthetic mica, glass flakes, $Al_2O_3$ flakes, $SiO_2$ flakes or $TiO_2$ flakes, as well as metal oxide-coated, flake-form materials.

3.  Interference pigments according to Claim 1 or 2, **characterised in that** the low-refractive-index coating on the flake-form substrates consists of $SiO_2$, $Al_2O_3$, $AlO(OH)$, $B_2O_3$, $MgSiO_3$ or of a mixture of the said compounds.

4.  Interference pigments according to one of Claims 1 to 3, **characterised in that** layer (A) essentially consists of one or more metal oxides.

5.  Interference pigments according to one of Claims 1 to 4, **characterised in that** layer (A) essentially consists of silicon dioxide, aluminium oxide, magnesium fluoride or mixtures thereof.

6.  Interference pigments according to one of Claims 1 to 5, **characterised in that** layer (B) comprises $Al_2O_3$, $Ce_2O_3$ and/or $B_2O_3$ as further metal oxide.

7.  Interference pigments according to one of Claims 1 to 6, **characterised in that** they have the layer sequence (A) + (B) up to four times.

8.  Interference pigments according to one of Claims 1 to 7, **characterised in that** they comprise only two layer sequences (A) + (B) and optionally (C).

9.  Process for the preparation of the interference pigments according to one of Claims 1 to 8, **characterised in that** the metal oxides are applied to the flake-form substrate by wet-chemical methods by hydrolytic decomposition of metal salts in aqueous medium.

10. Use of the interference pigments according to Claim 1 in paints, coatings, printing inks, security printing inks, plastics, ceramic materials, glasses and in cosmetic formulations.


**Revendications**

1.  Pigments d'interférence colorés intensément basés sur des substrats sous forme de flocons multi-revêtus qui ont au moins deux séquences de couches comprenant

    (A) un revêtement sans couleur ayant un indice de réfraction n ≤ 1,8,

    (B) un revêtement à indice de réfraction élevé de pseudo-brookite constitué d'un mélange de $TiO_2$ et de $Fe_2O_3$ dans le rapport 1:0,1 à 1:5 et optionnellement un ou plusieurs oxydes métalliques selon des quantités de ≤ 20% en poids, sur la base de la couche (B),
    et optionnellement

(C) une couche de protection externe.

2. Pigments d'interférence selon la revendication 1 ou 2, **caractérisés en ce que** les substrats sous forme de flocons sont du mica naturel ou synthétique, des flocons de verre, d'$Al_2O_3$, de $SiO_2$ ou de $TiO_2$, ainsi que des matériaux sous forme de flocons revêtus d'oxyde métallique.

3. Pigments d'interférence selon la revendication 1 ou 2, **caractérisés en ce que** le revêtement à indice de réfraction faible sur les substrats sous forme de flocons est constitué de $SiO_2$, $Al_2O_3$, $AlO(OH)$, $B_2O_3$, $MgSiO_3$ ou d'un mélange desdits composés.

4. Pigments d'interférence selon l'une des revendications 1 à 3, **caractérisés en ce que** la couche (A) est constituée essentiellement d'un ou plusieurs oxydes métalliques.

5. Pigments d'interférence selon l'une des revendications 1 à 4, **caractérisés en ce que** la couche (A) est constituée essentiellement d'oxyde de silicium, d'oxyde d'aluminium, d'oxyde de magnésium ou de mélanges afférents.

6. Pigments d'interférence selon l'une des revendications 1 à 5, **caractérisés en ce que** la couche (B) comprend $Al_2O_3$, $Ce_2O_3$ et/ou $B_2O_3$ en tant qu'oxyde métallique supplémentaire.

7. Pigments d'interférence selon l'une des revendications 1 à 6, **caractérisés en ce qu'**ils comprennent la séquence de couches (A) + (B) jusqu'à quatre fois.

8. Pigments d'interférence selon l'une des revendications 1 à 7, **caractérisés en ce qu'**ils comprennent seulement deux séquences de couches (A) + (B) et optionnellement (C).

9. Procédé pour la préparation de pigments d'interférence selon l'une des revendications 1 à 8, **caractérisé en ce que** les oxydes métalliques sont appliqués sur le substrat sous forme de flocons par des procédés chimiques par voie humide par décomposition hydrolytique de sels métalliques dans un milieu aqueux.

10. Utilisation des pigments d'interférence selon la revendication 1 dans des peintures, des revêtements, des encres d'impression, des encres d'impression de sécurité, des plastiques, des matériaux de céramique, des verres et des formulations cosmétiques.